# EUROPEAN PATENT SPECIFICATION

(11) **EP 2 199 010 B1**
(45) Date of publication and mention of the grant of the patent: **04.12.2013**
(21) Application number: 09178675.6
(22) Date of filing: 10.12.2009
(51) Int. Cl.: B23P 19/00, B23P 19/02, B67B 3/00, F17C 5/00, B23P 19/08

(54) **Automation system for changing a gland rubber**
Automatisches System zum Austauschen einer Gummidichtung
Système automatique pour remplacer un joint d'étanchéité en caoutchouc

(30) Priority: 17.12.2008 TR 200809549
(43) Date of publication of application: 23.06.2010
(73) Proprietor: Aygaz Anonim Sirketi, Istanbul (TR)
(72) Inventor: Citil, M.Fevzi, 34394 Istanbul (TR); Tikiroglu, Can, 34394 Istanbul (TR); Isbilen, Emrah, 34394 Istanbul (TR)
(74) Representative: Cayli, Hülya

(56) References cited:
- EP-A1- 0 780 191
- EP-A2- 0 919 516
- FR-A1- 2 683 295
- FR-A1- 2 859 199
- GB-A- 1 361 072
- US-A- 2 380 068
- US-A- 4 612 953

## Description

### Field of the invention

This invention is related to a rubber gland seal automation system for automatic change of rubber gland seal which is between the valve and the regulator and which provides sealing on house type round gas cylinders that contain LPG.

### Background of the invention

House type round gas cylinders are used to meet various needs. These cylinders are used in many applications such as furnaces, hot water boilers etc. Round house type bottled gas cylinders contain LPG. LPG is an odorless and colorless gas. But it is specifically odored in the refineries in order enable detection of leaks. It is a flammable gas which is heavier than air.

There is a valve named mini-valve on house type round gas cylinders. This valve is placed to the exit point of the gas on the cylinder and enables gas exit. There is a regulator on the valve. The regulator controls the gas flow by regulating the pressure of LPG in the tube.

The sealing between the valve and the regulator is provided by a seal named gland rubber. Gland rubber prevents leak of gas during gas flow between valve and the regulator. The gland rubber is very important in the system since it prevents gas leaks.

The gland rubber is worn in time due to use of the cylinder, removal and installation of the regulator and for some other reasons. This causes cracks on the gland rubber. These crack may cause LPG leaks. In order to prevent this, the gland rubber is changed each time a house type round gas cylinder is filled. Thus, leaks that may happen due to wear of the gland rubber are prevented.

Manpower is used when changing the gland rubber on a house type round gas cylinder. The cylinder moving forward on the conveyor belt is changed by labour. This not only increases the costs but also brings faults depending on the human factor.

The present techniques use similar systems mentioned above in order to change gland rubbers of house type round gas cylinders. There is no advanced automation system for changing the gland rubber faster and for minimizing the faults and costs. However, this invention enables minimizing the faults and costs and provides an automation system for changing the gland rubber of house type round gas tubes.

In French patent document no FR2859199 of the known state of the art, it is mentioned that the gas cylinders advancing on a conveyor belt are processed when passing from one section to another. These processes include a heating mechanism, a blow mold, capping mechanisms and a labeling system. The conveyor system is covered and fed by pressurized air, the arm that holds the cylinders comprises a pneumatic system.

Patent document EP0780191A1, which represents the closest prior art, discloses a seal installing machine preferably used on pressurized gas containers. According to this document, a sensor is used in order to determine the presence of seals on the gas containers. If a gas container does not comprise seal, an arm installs a seal to said gas container. This seal is more like a safety lid of the container, which provides a guarantee against violation of the contents unless it is destroyed. Similarly, document FR2683295A1 discloses a seal installation system for gas cylinders. However, neither of these documents discloses changing (or replacing) the gland rubber of the gas cylinder.

### Brief description of the invention

The object of the invention is to provide a gland rubber automation system that enables reducing the costs and times and enables minimizing the faults when gland rubbers are being changed on cylinders moving forward on a conveyor line.

### Brief description of the figures

A gland rubber developed to achieve the objects of this invention is shown in the amended figures, wherein;

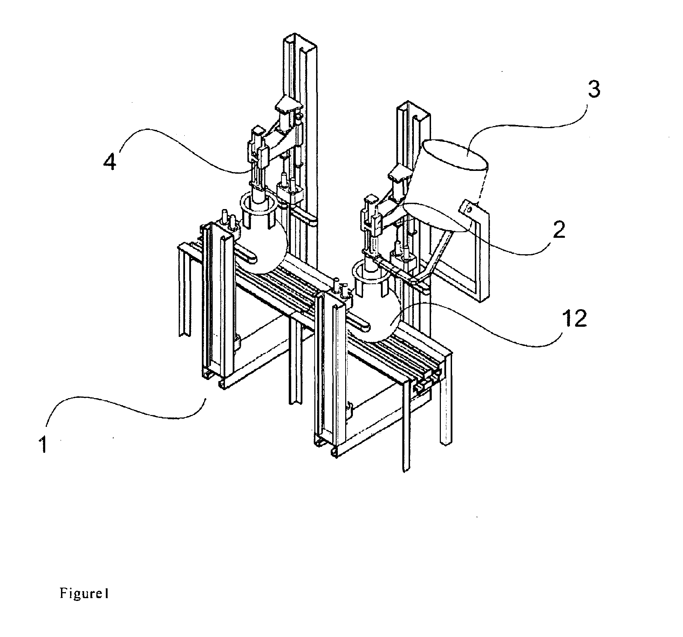

Figure 1 - is a general view of the system's operation.

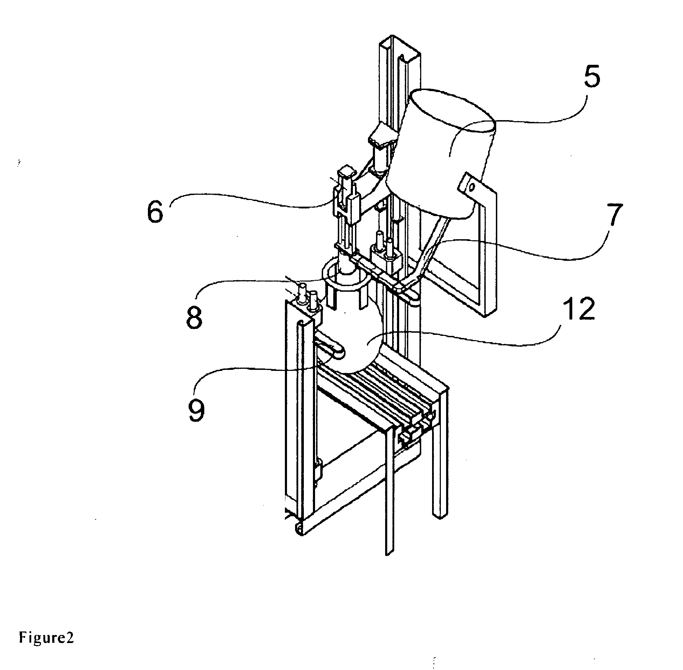

Figure 2 - is a view of the installation system.

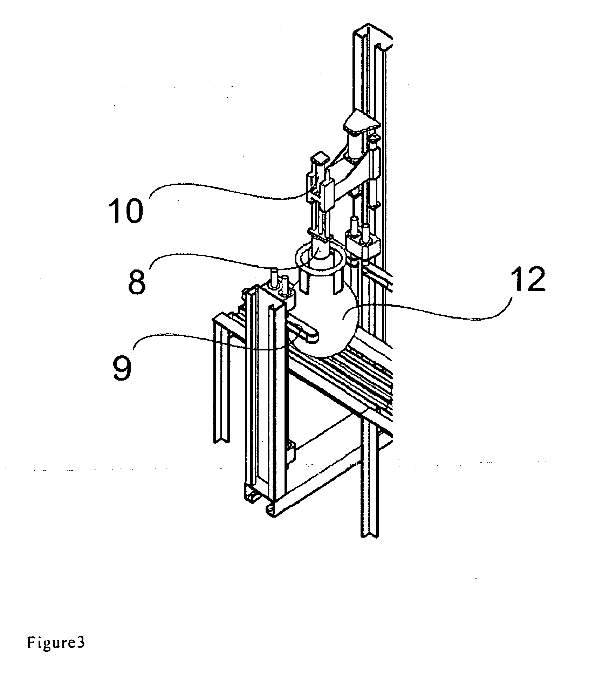

Figure 3 - is a view of the removal system.

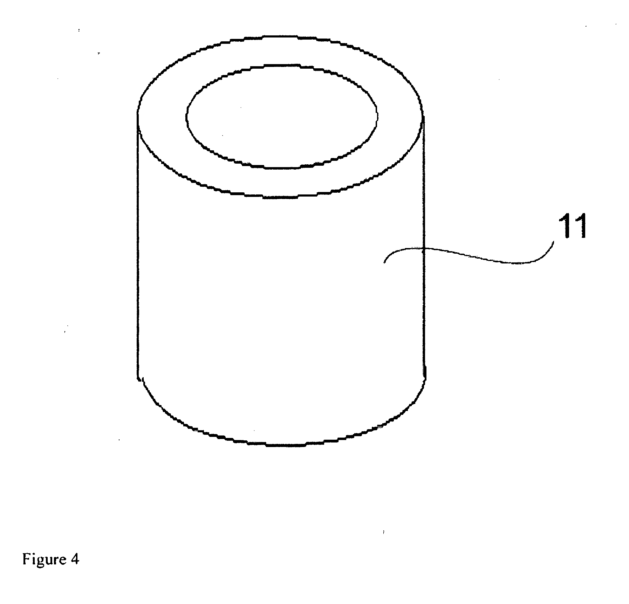

Figure 4 - is a view of the gland rubber.

Each part in the figures is given a reference number and these numbers refer to;
1. Gland rubber automation system
2. Installation system
3. Feeding system
4. Removal system
5. Gland rubber chamber
6. Gland rubber installation piston
7. Gland rubber driving rail
8. Cylinder centering head
9. Cylinder centering piston
10. Removal piston with protrusion
11. Gland rubber
12. Gas cylinder

### Detailed description of the invention

In accordance with the invention, the objective is achieved in a gland rubber automation system according to claim 1. Advantageous modifications of the invention are objects of the dependent claims.

Nowadays the usage areas of house type round gas cylinders (12) are very common. These cylinders carry a risk due to the LPG gas that they contain. The gland rubber (11) between the valve and the regulator is changed each time the cylinders are filled for safety reasons. The gland rubber (11) is located between the valve and the regulator and prevents the gas from leaking out. Therefore it is one of the important components of the system. However, the gland rubber (11) is worn and cracks form on it in time due to reasons such as the regulator being removed and installed and the cylinder being filled. The gland rubber (11) should be changed since LPG can leak out from these cracks.

The gas cylinder (12) advancing on the conveyor belt reaches the first station where the removal procedure (4) is performed and the gas cylinder is centered by the centering piston (9). Here the cylinder centering head (8) which is a pneumatic arm descends on top of the cylinder (12) and centers the cylinder (12). The removal piston (10) has a structure with a protrusion. The removal piston (10) on top of the cylinder (12) removes the gland rubber (11) from the mini-valve by the mechanism with protrusion. The mechanism with protrusion expands and holds the gland rubber (11) at multiple points and pulls up the held gland rubber (11) by using the pneumatic arm. Thus the gland rubber (11) is removed from the mini-valve. The protrusions are then closed and drop the old gland rubber (11) into the accumulation tank located under the belt.

After the old gland rubber (11) is removed from the removal system (4) the centering piston (9) is opened and the cylinder (12) starts advancing on the conveyor belt. The cylinder (12) reaching the installation system (2) is centered again by the centering piston (9). The new gland rubber (11) is installed onto the mini-valve in the installation system (2). The centering head (8) descends onto the fixed cylinder (12). The centering head (8) is guided by a conical jig. Thus the installation position of the new gland rubber (11) is precisely defined. The installation piston (6) installs the new gland rubber (11) to the mini-valve. Then the centering pistons (9) are opened and let the cylinder (12) advance on the conveyor belt.

The installation system (2) is in relation with the feeding system (3). The feeding system (3) is comprised of the gland rubber chamber (5) where the new gland rubbers (11) are stored and the feeding rail (7). The feeding system (3) has a large capacity sufficient enough for the system. The installation system (2) takes the new gland rubber (11) from the feeding system (3). The new gland rubber (11) is transferred from the exit point of the feeding chamber (5) to the mouth of installation piston (6) on the installation system (2) by a rail (7). Then the installation procedure is performed.

In light of these fundamental concepts, it is possible to develop various applications of "A Rubber Gland Seal Automation System" of the invention and the invention can not be limited to the examples described herein and it is essentially as described in the claims.

## Claims

1. A gland rubber automation system (1) for automatically changing the gland rubber (11) which is located between the valve and the regulator on LPG containing house type round gas cylinders and which prevents leaks, in its basic form comprising;
- a gland rubber chamber (5) which stores the new gland rubbers (11),
- an installation piston (6) which installs the new gland rubber (11),
- a rail (7) which drives the gland rubber (11) to the installation system,
- a centering head (8) which adjusts the installation and removal position of the gland rubber (11) when installing the new gland rubber (11) and removing the old gland rubber (11),
- a group of centering pistons (9) which centers the gas cylinder (12) when installing the new gland rubber (11) and removing the old gland rubber (11),
- an installation system (2) which installs the gland rubber (11) to the centered gas cylinder (12) and which comprises and uses the gland rubber installation piston (6), centering head (8) and centering piston (9) in combination,
- a feeding system (3) which comprises the gland rubber chamber (5) containing the new gland rubbers (11) and the driving rail (7) that transfers the gland rubber (11) to the installation piston (6) and which works together with the installation system (2),
- a removal system (4) which comprises the removal piston (10) having protrusions and which removes the old gland rubber (11).

2. A gland rubber automation system (1) according to Claim 1 **characterized by** a removal piston (10) with protrusions which removes the gland rubber (11) by descending on the mini-valve and which holds and compresses the gland rubber (11) by the protrusions.

3. A gland rubber automation system (1) according to Claim 1 **characterized by** a gland rubber chamber (5) which stores the new gland rubbers (11) and works in relation with the installation system (2).

4. A gland rubber automation system (1) according to any of the preceding claims **characterized by** a gland rubber driving rail (7) which takes the gland rubber (11) from the feeding chamber (5) and transfers to the mouth of installation piston (6).

5. A gland rubber automation system (1) according to any of the preceding claims **characterized by** a gland rubber installation piston (6) which receives the new gland rubber (11) through the driving rail (7) and which installs the gland rubber (11) onto the mini-valve.

6. A gland rubber automation system (1) according to any of the preceding claims **characterized by** a gas cylinder centering piston (9) which fixes the gas cylinder (12) advancing on the conveyor belt when it reaches to the removal (4) or installation (2) systems and thus which enables easy removal and installation of the gland rubber (11).

7. A gland rubber automation system (1) according to any of the preceding claims **characterized by** a gas cylinder centering head (8) which descends onto the centered cylinder (12), which precisely defines the installation position of the gland rubber (11) and which enables that the installation piston (6) can install the gland rubber (11) to its position accordingly.

## Patentansprüche

1. Automatisches Gummidichtungssystem (1) zum automatischen Austauschen der Gummidichtung (11), die zwischen dem Ventil und dem Regulierer an Flüssiggas enthaltenden, gehäuseartigen runden Gaszylindern angeordnet ist und Leckagen verhindert, in seiner Basisform umfassend:
- eine Gummidichtungskammer (5), die die neuen Gummidichtungen (11) speichert,
- einen Installationskolben (6), der die neue Gummidichtung (11) installiert,
- eine Schiene (7), die die Gummidichtung (11) zum Installationssystem führt,
- einen Zentrierungskopf (8), der die Installations- und Ausbaustellung der Gummidichtung (11) beim Installieren der neuen Gummidichtung (11) und beim Ausbauen der alten Gummidichtung (11) einstellt,
- eine Gruppe von Zentrierkolben (9), die den Gaszylinder (12) beim Installieren der neuen Gummidichtung (11) und Ausbauen der alten Gummidichtung (11) zentrieren,
- ein Installationssystem (2), das die Gummidichtung an dem zentrierten Gaszylinder (12) installiert und den Installationskolben (6) für die Gummidichtung, einen Zentrierkopf (8) und einen Zentrierkolben (9) in Kombination umfasst und verwendet,
- ein Zuführsystem (3), das die Gummidichtungskammer (5), enthaltend die neuen Gummidichtungen (11), und die Antriebsschiene (7) umfasst, die die Gummidichtung (11) dem Installationskolben (6) zuführt, welches mit dem Installationssystem (2) zusammenarbeitet,
- ein Ausbausystem (4), das den Ausbaukolben (10) mit Vorsprüngen umfasst und die alte Gummidichtung (11) ausbaut.

2. Automatisches Gummidichtungssystem (1) nach Anspruch 1, **gekennzeichnet durch** einen Ausbaukolben (10) mit Vorsprüngen, das die Gummidichtung (11) **durch** Absenken auf das Miniventil entfernt und die Gummidichtung (11) **durch** die Vorsprünge hält und zusammendrückt.

3. Automatisches Gummidichtungssystem (1) nach Anspruch 1, **gekennzeichnet durch** eine Gummidichtungskammer (5), die die neuen Gummidichtungen (11) speichert und mit Bezug auf das Installationssystem (2) arbeitet.

4. Automatisches Gummidichtungssystem (1) nach einem der vorhergehenden Ansprüche, **gekennzeichnet durch** eine Gummidichtungsführungsschiene (7), die die Gummidichtung (11) aus der Zuführkammer (5) entnimmt und dem Mund des Installationskolbens (6) zuführt.

5. Automatisches Gummidichtungssystem(1) nach einem der vorhergehenden Ansprüche, **gekennzeichnet durch** einen Installationskolben (6) für die Gummidichtung, der die neue Gummidichtung (11) **durch** die Führungsschiene (7) empfängt und die Gummidichtung (11) auf dem Miniventil installiert.

6. Automatisches Gummidichtungssystem (1) nach einem der vorhergehenden Ansprüche, **gekennzeichnet durch** einen den Gaszylinder zentrierenden Kolben (9), der den auf dem Förderband fortschreitenden Gaszylinder (12) fixiert, wenn dieser das Ausbausystem (4) oder das Installationssystem (2) erreicht, und damit einen leichten Ausbau und Installation der Gummidichtung (11) ermöglicht.

7. Automatisches Gummidichtungssystem (1) nach einem der vorhergehenden Ansprüche, **gekennzeichnet durch** einen den Gaszylinder zentrierenden Kopf (8), der sich auf den zentrierten Zylinder (12) absenkt, die Installationsposition des Gummirings (11) präzise definiert und ermöglicht, dass der Installationskolben (6) die Gummidichtung (11) entsprechend in deren Position installiert.

## Revendications

1. Système d'automatisation de caoutchouc d'étanchéité (1) permettant de changer automatiquement le caoutchouc d'étanchéité (11) qui est situé entre la soupape et le régulateur sur des cylindres à gaz ronds de type logement contenant du GPL et qui prévient les fuites, dans sa forme basique comprenant :
- une chambre de caoutchouc d'étanchéité (5) qui stocke les nouveaux caoutchoucs d'étanchéité (11),
- un piston d'installation (B) qui installe le nouveau caoutchouc d'étanchéité (11),
- un rail (7) qui entraîne le caoutchouc d'étanchéité (11) vers le système d'installation,
- une tête de centrage (8) qui ajuste la position d'installation et d'enlèvement du caoutchouc d'étanchéité (11) lors de l'installation du nouveau caoutchouc d'étanchéité (11) et de l'enlèvement de l'ancien caoutchouc d'étanchéité (11),
- un groupe de pistons de centrage (9) qui centre le cylindre à gaz (12) lors de l'installation du nouveau caoutchouc d'étanchéité (11) et de l'enlèvement de l'ancien caoutchouc d'étanchéité (11).
- un système d'installation (2) qui installe le caoutchouc d'étanchéité (11) sur le cylindre à gaz centré (12) et qui comprend et utilise le piston d'installation de caoutchouc d'étanchéité (6), la tête de centrage (8) et le piston de centrage (9) en combinaison,
- un système d'alimentation (3) qui comprend la chambre de caoutchouc d'étanchéité (5) contenant les nouveaux caoutchoucs d'étanchéité (11) et le rail d'entraînement (7) qui transfère le caoutchouc d'étanchéité (11) au piston d'installation (6) et qui travaille conjointement avec le système d'installation (2),
- un système d'enlèvement (4) qui comprend le piston d'enlèvement (10) ayant des protubérances et qui enlève l'ancien caoutchouc d'étanchéité (11).

2. Système d'automatisation de caoutchouc d'étanchéité (1) selon la revendication 1, **caractérisé par** un piston d'enlèvement (10) avec des protubérances qui enlève le caoutchouc d'étanchéité (11) en descendant sur la mini-soupape et qui tient et comprime le caoutchouc d'étanchéité (11) par les protubérances.

3. Système d'automatisation de caoutchouc d'étanchéité (1) selon la revendication 1, **caractérisé par** une chambre de caoutchouc d'étanchéité (5) qui stocke les nouveaux caoutchoucs d'étanchéité (11) et travaille en relation avec le système d'installation (2).

4. Système d'automatisation de caoutchouc d'étanchéité (1) selon l'une quelconque des revendications précédentes, **caractérisé par** un rail d'entraînement de caoutchouc d'étanchéité (7) qui prélève le caoutchouc d'étanchéité (11) de la chambre d'alimentation (5) et le transfère vers le bec du piston d'installation (6).

5. Système d'automatisation de caoutchouc d'étanchéité (1) selon l'une quelconque des revendications précédentes, **caractérisé par** un piston d'installation de caoutchouc d'étanchéité (6) qui reçoit le nouveau caoutchouc d'étanchéité (11) à travers le rail d'entraînement (7) et qui installe le caoutchouc d'étanchéité (11) sur la mini-soupape.

6. Système d'automatisation de caoutchouc d'étanchéité (1) selon l'une quelconque des revendications précédentes, **caractérisé par** un piston de centrage de cylindre à gaz (9) qui fixe le cylindre à gaz (12) avançant sur la courroie de convoyeur lorsqu'elle atteint les systèmes d'enlèvement (4) ou d'installation (2) et permet ainsi un enlèvement et une installation faciles du caoutchouc d'étanchéité (11).

7. Système d'automatisation de caoutchouc d'étanchéité (1) selon l'une quelconque des revendications précédentes, **caractérisé par** une tête de centrage de cylindre à gaz (8) qui descend sur le cylindre centré (12), qui définit précisément la position d'installation du caoutchouc d'étanchéité (11) et qui permet au piston d'installatien (6) de pouvoir installer le caoutchouc d'étanchéité (11) dans sa position en conséquence.
